(19) Europäisches Patentamt European Patent Office Office européen des brevets

(11) **EP 4 488 849 A1**

(12) **EUROPEAN PATENT APPLICATION**
published in accordance with Art. 153(4) EPC

(43) Date of publication:
**08.01.2025 Bulletin 2025/02**

(21) Application number: **22929880.7**

(22) Date of filing: **04.03.2022**

(51) International Patent Classification (IPC):
**G06F 16/383** (2019.01)     **G06F 16/81** (2019.01)
**G06F 16/83** (2019.01)

(52) Cooperative Patent Classification (CPC):
**G06F 16/383; G06F 16/81; G06F 16/83**

(86) International application number:
**PCT/JP2022/009551**

(87) International publication number:
**WO 2023/166736 (07.09.2023 Gazette 2023/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **OHYAMA, Shogo**
**Kawasaki-shi, Kanagawa 211-8588 (JP)**
• **KATAOKA, Masahiro**
**Kawasaki-shi, Kanagawa 211-8588 (JP)**
• **IWASAKI, Hiroshi**
**Otsu-shi, Shiga 520-0043 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57) An information processing apparatus specifies a terminal subject based on a parent-child relationship of subjects corresponding to a plurality of tags used in a document. The information processing apparatus calculates a vector of a tag corresponding to the terminal subject based on each word included in definition information set for the terminal subject and a word vector dictionary that defines a vector of each word.

FIG. 4

EP 4 488 849 A1

**Description**

TECHNICAL FIELD

The present invention relates to an information processing program and the like.

BACKGROUND ART

In the field of document search technology, there is a technique in which a vector is assigned to each document registered in a document database (DB) and the document DB is searched for a document of a vector corresponding to a vector of a search query when the search query is received.

When a vector is assigned to a document, a vector of each word included in the document is calculated using an existing technique such as Word2Vec or Poincaré embeddings, the vectors of the individual words are integrated to calculate a vector of the document, and the calculated vector is assigned.

Note that, in the document DB described above, a tagged document such as a hypertext markup language (HTML) document or an extensible business reporting language (XBRL) document may be registered, and the tagged document also needs to be searched for using a vector assigned thereto. Examples of the XBRL document include a securities report or the like.

According to the existing technique, when a vector of a tagged document is calculated, preprocessing of deleting information other than text, such as tags, from the tagged document is performed, and then the vector of the document is calculated in a similar manner to a normal document.

CITATION LIST

PATENT DOCUMENT

Patent Document 1: Japanese Laid-open Patent Publication No. 2006-343843

SUMMARY OF INVENTION

TECHNICAL PROBLEM

However, the existing technique described above has a problem that the accuracy of the vector of the tagged document decreases.

For example, documents disclosed in the securities report vary depending on individual companies, and notation fluctuations occur. XBRL tags used in the securities report are used to correctly extract information even when there are notation fluctuations, and the XBRL tags indicate subjects defined in rules, laws, and the like in financial accounting. Accordingly, for example, <Sales> 100 </Sales> and <Cost of sales> 100 </Cost of sales> may not be distinguished when the XBRL tags are simply deleted as in the existing technique, and thus the tagged document needs to be vectorized without deleting the XBRL tags.

Here, while it is possible to vectorize the XBRL tags using the Word2Vec, the Word2Vec calculates a vector from a context of a word, and thus the vector may not be correctly calculated when different XBRL tags are attached to similar sentences.

Furthermore, while it is also possible to calculate a vector by learning a relationship between subjects included in XBRL definition information by the Poincaré embeddings, similar vectors are assigned to subjects of different concepts, and thus it may not be used to compare documents including XBRL tags.

In one aspect, an object of the present invention is to provide an information processing program, an information processing method, and an information processing apparatus capable of improving accuracy of a vector of a tagged document.

SOLUTION TO PROBLEM

In a first idea, a computer is caused to execute the following process. The computer specifies a terminal subject among subjects corresponding to a plurality of tags used in a document based on a parent-child relationship of the subjects corresponding to the plurality of tags. The computer calculates a vector of a tag corresponding to the terminal subject based on each word included in definition information set for the terminal subject and a word vector dictionary that defines a vector of each word.

ADVANTAGEOUS EFFECTS OF INVENTION

Accuracy of a vector of a tagged document may be improved.

BRIEF DESCRIPTION OF DRAWINGS

FIG. 1A is a diagram illustrating an example of a definition statement of a subject defined in a law, a guideline, or the like.
FIG. 1B is a diagram illustrating an example in which a definition statement of a Cost of sales is extracted from FIG. 1A as an example of a tag.
FIG. 2 is a diagram illustrating an example of a relationship between subjects included in taxonomy.
FIG. 3 is a diagram illustrating an example of an instance.
FIG. 4 is a diagram (1) for explaining an exemplary process of an information processing apparatus according to the present embodiment.
FIG. 5 is a diagram (2) for explaining an exemplary process of the information processing apparatus according to the present embodiment.
FIG. 6 is a diagram illustrating an exemplary data structure of a tag vector table.
FIG. 7 is a diagram for explaining an exemplary process of calculating a vector of a sentence.
FIG. 8 is a diagram illustrating an exemplary inverted index.
FIG. 9 is a functional block diagram illustrating a configuration of the information processing apparatus according to the present embodiment.
FIG. 10 is a flowchart of preprocessing to be executed by the information processing apparatus.
FIG. 11 is a flowchart of a search process to be executed by the information processing apparatus.
FIG. 12 is a diagram illustrating an exemplary hardware configuration of a computer that implements functions similar to those of the information processing apparatus according to the embodiment.

DESCRIPTION OF EMBODIMENTS

Hereinafter, an embodiment of an information processing program, an information processing method, and an information processing apparatus disclosed in the present application will be described in detail with reference to the drawings. Note that the present invention is not limited by the embodiment.

[Embodiment]

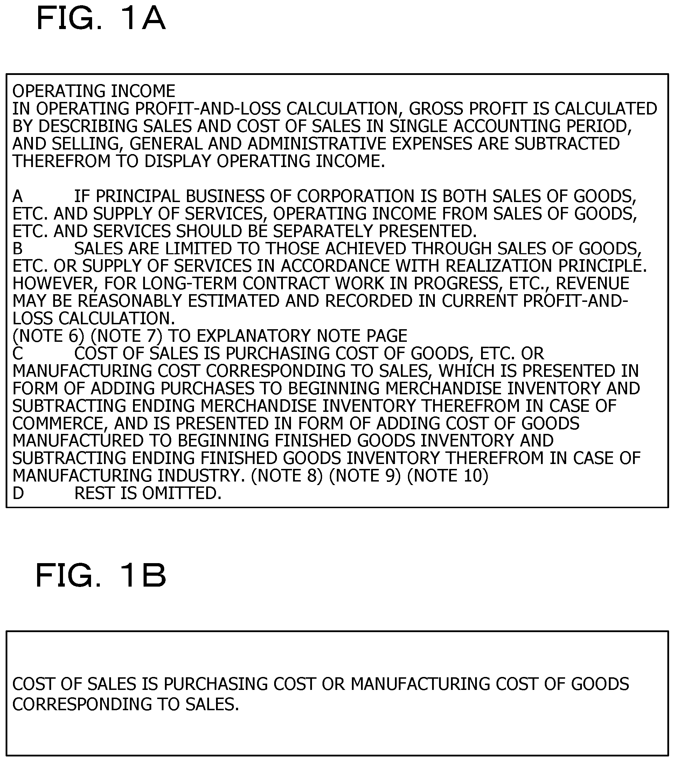

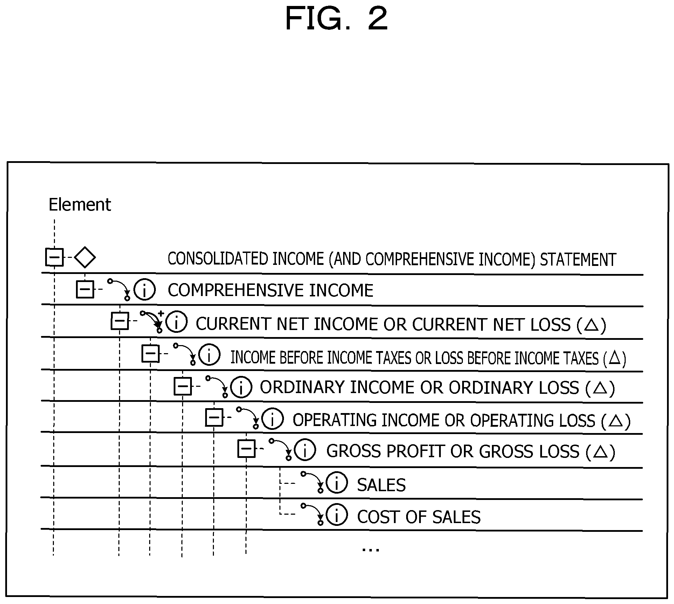

An XBRL document will be described before describing the information processing apparatus according to the present embodiment. An XBRL is an extensible markup language (XML)-based computer language standardized so that information for various financial reports may be created, distributed, and used, and a document created based on the XBRL will be referred to as an XBRL document.
For example, the XBRL document includes taxonomy and an instance. The taxonomy is a specification of data, and defines a definition statement of a subject, a relationship between subjects, a parent-child relationship of subjects, and the like. The parent-child relationship of subjects indicates, for example, a calculation relationship of the subjects.
The definition statement of the subject indicates a definition statement described in laws, guidelines, rules, and the like corresponding to the subject. For example, a definition statement regarding an Operating income is as illustrated in FIG. 1A or in FIG. 1B. FIG. 1A is a diagram illustrating an example of a definition statement of a subject defined in a law, a guideline, or the like. FIG. 1B is a diagram illustrating an example in which a definition statement of a Cost of sales is extracted from FIG. 1A as an example of a tag. The definition statement illustrated in FIGs. 1A and 1B is a part of the definition statement regarding the Operating income. Descriptions of definition statements regarding other subjects will be omitted.
The relationship between subjects is information that defines a hierarchical relationship between the subjects in a hierarchical structure. FIG. 2 is a diagram illustrating an example of the relationship between subjects included in the taxonomy. In the example illustrated in FIG. 2, a subject "Comprehensive income" is linked to be subordinate to a subject "Consolidated income (and Comprehensive income) statement". A subject "Current net income or Current net loss ($\Delta$)" is linked to be subordinate to the subject "Comprehensive income".
A subject "Income before income taxes or Loss before income taxes ($\Delta$)" is linked to be subordinate to the subject "Current net income or Current net loss ($\Delta$)". A subject "Ordinary income or Ordinary loss ($\Delta$)" is linked to be subordinate to the subject "Income before income taxes or Loss before income taxes ($\Delta$)". A subject "Operating income or Operating loss (Δ)" is linked to be subordinate to the subject "Ordinary income or Ordinary loss (Δ)".

A subject "Gross profit or Gross loss (Δ)" is linked to be subordinate to the subject "Operating income or Operating loss (Δ)". A subject "Sales" and a subject "Cost of sales" are linked to be subordinate to the subject "Gross profit or Gross loss (Δ)". Since no subject is subordinate to the subject "Sales" and the subject "Cost of sales", the subject "Sales" and the subject "Cost of sales" serve as "terminal subjects".

The calculation relationship of subjects defines calculation of a certain subject using a subject subordinate to the certain subject. For example, the calculation relationship regarding the subject "Gross profit or Gross loss (Δ)" is defined by taxonomy based on an equation (1). In the equation (1), the calculation relationship of the subject "Gross profit or Gross loss (Δ)" is defined by the terminal subjects "Sales" and "Cost of sales".

$$\text{Gross profit or Gross loss } (\triangle) = \text{Sales} - \text{Cost of sales...} \quad (1)$$

The instance is data itself, and is created by a submitter based on the taxonomy described above. A value of the subject is set to the instance. Examples of the value of the subject include an amount of money, a character string, a ratio, and the like.

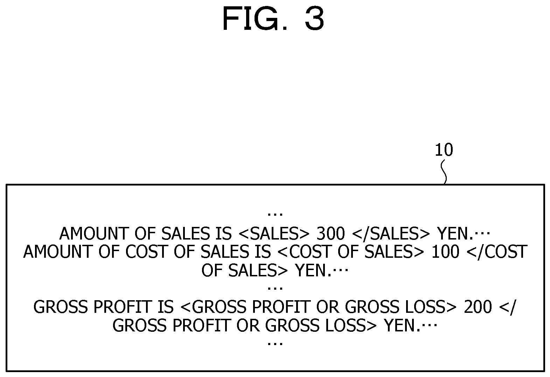

FIG. 3 is a diagram illustrating an example of the instance. Information included in an instance 10 is associated with the subject of the taxonomy by an XBRL tag. For example, in FIG. 3, a value "300" between the XBRL tag <Sales> and </Sales> is a value of the subject "Sales". A value "100" between the XBRL tag <Cost of sales> and </Cost of sales> is a value of the subject "Cost of sales". A value "200" between the XBRL tag <Gross profit or Gross loss> and </Gross profit or Gross loss> is a value of the subject "Gross profit or Gross loss (Δ)". In the following descriptions, the XBRL tag will be referred to as a "tag" as appropriate.

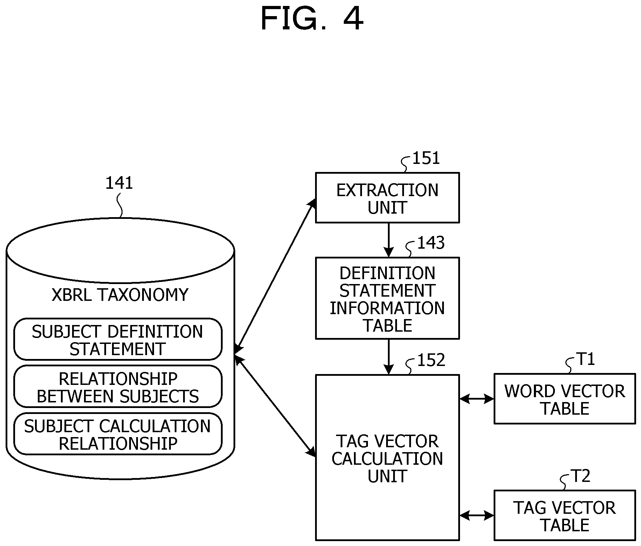

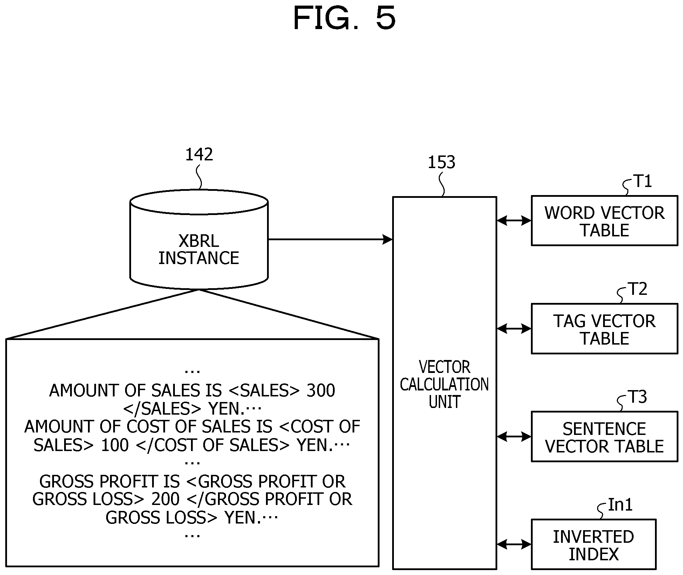

Next, an exemplary process of the information processing apparatus according to the present embodiment will be described. FIGs. 4 and 5 are diagrams for explaining an exemplary process of the information processing apparatus according to the present embodiment. First, FIG. 4 will be described. As illustrated in FIG. 4, the information processing apparatus includes XBRL taxonomy 141. The XBRL taxonomy 141 has, for each subject, information regarding a definition statement of a subject, a relationship between subjects, and a calculation relationship of subjects defined in the taxonomy described above.

Descriptions regarding the definition statement of the subject are similar to the contents described with reference to FIGs. 1A and 1B. Descriptions regarding the relationship between the subjects are similar to the contents described with reference to FIG. 2. Descriptions regarding the calculation relationship of the subjects are similar to the descriptions above.

Note that, when the definition statement of the subject is not included in the taxonomy, reference information of the subject definition included in the taxonomy or definition statement information created based on laws, guidelines, documents, and the like related to the taxonomy may be used as the definition statement of the subject.

An extraction unit 151 of the information processing apparatus analyzes the XBRL taxonomy 141, and extracts information regarding a definition statement of a subject for each subject. The extraction unit 151 registers, in a definition statement information table 143, a subject and a definition statement in association with each other.

A tag vector calculation unit 152 of the information processing apparatus executes the following processing to calculate a vector of the subject, and generates a tag vector table T2. The tag vector calculation unit 152 executes processing of specifying a terminal subject, processing of calculating a vector of the terminal subject, and processing of calculating a vector of a subject other than the terminal subject.

The processing of specifying the terminal subject will be described. The tag vector calculation unit 152 specifies a terminal subject defined by a calculation relationship of a certain subject based on the calculation relationship of the subjects and the relationship between the subjects in the XBRL taxonomy 141. Here, descriptions will be given assuming that the certain subject is "Gross profit or Gross loss (Δ)". The calculation relationship of the subject "Gross profit or Gross loss (Δ)" is defined by the equation (1) described above. The subjects included in the equation (1) (subjects other than Gross profit or Gross loss (Δ)) are "Sales" and "Cost of sales".

The tag vector calculation unit 152 compares the subject "Sales" and the subject "Cost of sales" with the relationship between the subjects to find out that no subject is linked to be subordinate to the subject "Sales" and the subject "Cost of sales", as illustrated in FIG. 2. Thus, the tag vector calculation unit 152 specifies the terminal subjects "Sales" and "Cost of sales" from the calculation relationship of the subject "Gross profit or Gross loss (Δ)".

The processing of calculating a vector of the terminal subject will be described. When the tag vector calculation unit 152 specifies the terminal subject, it obtains the definition statement corresponding to the terminal subject from the definition statement information table 143. The tag vector calculation unit 152 performs morphological analysis on the definition statement corresponding to the terminal subject, thereby dividing the definition statement into a plurality of words.

The tag vector calculation unit 152 specifies vectors corresponding to the words of the definition statement corresponding to the terminal subject based on a word vector table T1. The word vector table T1 is a table that associates a word with a vector corresponding to the word. It is assumed that the vector corresponding to the word is learned in advance using an existing technique such as Word2Vec or Poincaré embeddings.

The tag vector calculation unit 152 calculates a vector of the terminal subject by integrating the vectors corresponding to the individual words of the definition statement of the terminal subject. For example, the tag vector calculation unit 152 calculates a vector of the terminal subject "Sales" by integrating the vectors corresponding to the individual words of the definition statement of the terminal subject "Sales". The tag vector calculation unit 152 calculates a vector of the terminal subject "Cost of sales" by integrating the vectors corresponding to the individual words of the definition statement of the terminal subject "Cost of sales".

The tag vector calculation unit 152 registers the relationship between the terminal subject and the vector in the tag vector table T2.

The processing of calculating a vector of a subject other than the terminal subject will be described. Here, descriptions will be given using the subject "Gross profit or Gross loss (△)" as a subject other than the terminal subject. The calculation relationship of the subject "Gross profit or Gross loss (△)" is as expressed in the equation (1), and is defined by an operation (four arithmetic operations, etc.) of the terminal subject. The tag vector calculation unit 152 obtains the vector of the terminal subject from the tag vector table T2.

The tag vector calculation unit 152 subtracts the vector of the subject "Cost of sales" from the vector of the subject "Sales" based on the equation (1), thereby calculating a vector of the subject "Gross profit or Gross loss (△)".

At a time of calculating a vector of a subject other than the terminal subject, the tag vector calculation unit 152 preferentially calculates a vector from a subject on the descendant side. For example, when the relationship between the subjects is as illustrated in FIG. 2, the tag vector calculation unit 152 calculates the vector of the "Gross profit or Gross loss (△)", and then calculate the vector of the subject "Operating income or Operating loss (△)".

Likewise, the tag vector calculation unit 152 calculates the vectors in the order of the subject "Ordinary income or Ordinary loss (△)", the subject "Income before income taxes or Loss before income taxes (△)", the subject "Current net income or Current net loss (△)", and the subject "Comprehensive income".

When the calculation relationship of the subject other than the terminal subject is defined by a descendant subject, the tag vector calculation unit 152 performs an operation using the vector of the descendant subject to calculate the vector of the subject other than the terminal subject.

Here, the tag vector calculation unit 152 may preferentially calculate a vector of a subject for which all vectors of descendant subjects defined in the calculation relationship of the subjects have been calculated among a plurality of subjects for which vectors have not been calculated.

When the calculation relationship is not defined for the subject other than the terminal subject, the tag vector calculation unit 152 calculates, in a similar manner to the terminal subject, a vector of the subject based on a result of the morphological analysis performed on the definition statement corresponding to the subject and the word vector table T1.

The tag vector calculation unit 152 registers, in the tag vector table T2, the relationship between the subject and the vector of the subject calculated based on the calculation relationship.

With the processing described above performed by the tag vector calculation unit 152, the relationship between the subject and the vector of the subject is registered in the tag vector table T2. The subject registered in the tag vector table T2 corresponds to the tag included in the instance.

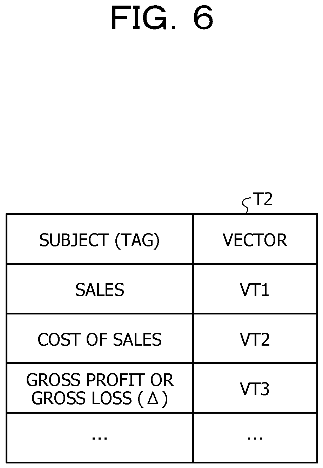

FIG. 6 is a diagram illustrating an exemplary data structure of the tag vector table. As illustrated in FIG. 6, the tag vector table T2 associates a subject (tag) with a vector.

The description proceeds to FIG. 5. In FIG. 5, the information processing apparatus calculates a vector of a sentence registered in an XBRL instance 142 using the word vector table T1 and the tag vector table T2 created in FIG. 4. The instance 10 (sentence including a tag, document) and the like described with reference to FIG. 3 are registered in the XBRL instance 142.

A vector calculation unit 153 of the information processing apparatus extracts a sentence including a tag from the XBRL instance 142, and performs morphological analysis on the sentence, thereby dividing the sentence into a plurality of words and tags. For the words included in the sentence, the vector calculation unit 153 specifies a vector of each of the words based on the word vector table T1.

The vector calculation unit 153 extracts, as a tag, a portion sandwiched by a "<character string corresponding to a subject>" and a portion sandwiched by a "</character string corresponding to a subject>". For the tags included in the sentence, the vector calculation unit 153 specifies a vector of each of the tags based on the tag vector table T2. For example, the vector calculation unit 153 assigns a vector of the subject "Sales" in the tag vector table T2 as a vector of the tag <Sales>. The vector calculation unit 153 assigns the vector of the subject "Sales" in the tag vector table T2 as a vector of the tag </Sales>.

The vector calculation unit 153 calculates a vector of the sentence by integrating the vector of each word included in the sentence and the vector of each tag. In the following descriptions, a vector of a sentence will be referred to as a "sentence vector".

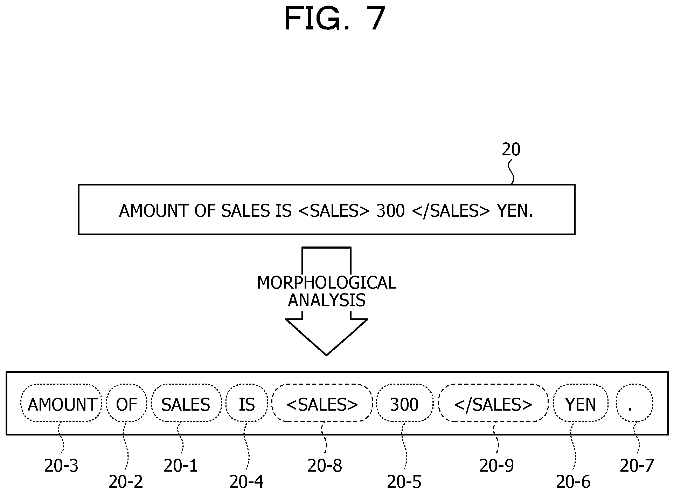

FIG. 7 is a diagram for explaining an exemplary process of calculating a vector of a sentence. For example, a case where the vector calculation unit 153 calculates a vector of a sentence 20 will be described. It is assumed that the sentence 20 is "An amount of sales is <Sales> 300 </Sales> yen".

The vector calculation unit 153 performs morphological analysis on the sentence 20 to make a division into words 20-1, 20-2, 20-3, 20-4, 20-5, 20-6, and 20-7. Furthermore, the vector calculation unit 153 specifies tags 20-8 and 20-9 from the sentence 20.

The vector calculation unit 153 specifies each of vectors of the words 20-1 to 20-7 based on the word vector table T1. The vector calculation unit 153 specifies each of vectors of the tags 20-8 and 20-9 based on the tag vector table T2. The vector calculation unit 153 calculates a sentence vector of the sentence 20 by integrating the vectors of the words 20-1 to 20-7 and the vectors of the tags 20-8 and 20-9.

The vector calculation unit 153 calculates a sentence vector of each sentence by repeatedly executing the process described above for each sentence included in the XBRL instance 142. The vector calculation unit 153 registers the sentence vectors in a sentence vector table T3.

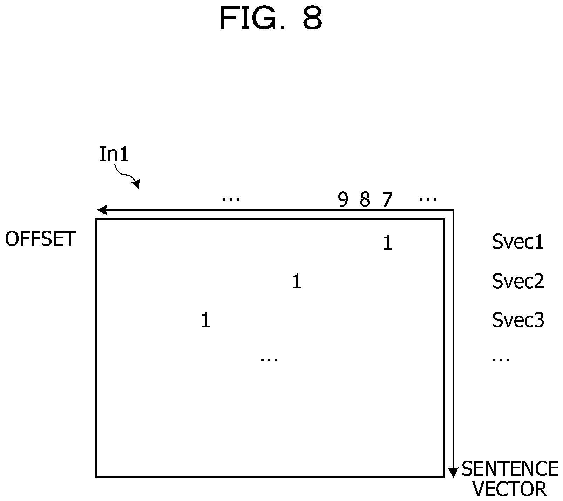

Furthermore, the vector calculation unit 153 generates an inverted index In1 in which a position (offset) of the sentence of the XBRL instance 142 is associated with the sentence vector. FIG. 8 is a diagram illustrating an example of the inverted index. A horizontal axis of the inverted index In1 is an axis corresponding to an offset. A vertical axis of the inverted index In1 is an axis corresponding to a sentence vector. The inverted index In1 is indicated by a bitmap of "0" or "1", and all bitmaps are set to "0" in the initial state.

For example, "1" is set at a portion where the row of the sentence vector "Svec1" and the column of the offset "7" intersect. Thus, it is indicated that the position of the first word of the sentence with the sentence vector "Svec1" is present at the eighth position from the first word of the XBRL instance 142.

As described above, the information processing apparatus according to the present embodiment specifies a terminal subject defined by a calculation relationship of a certain subject based on the calculation relationship of the subjects and the relationship between the subjects in the XBRL taxonomy 141. For the terminal subject, the information processing apparatus calculates a vector of the terminal subject based on the definition statement corresponding to the terminal subject and the word vector table T1. As a result, the vector of the tag corresponding to the terminal subject may be accurately calculated.

For a subject other than the terminal subject, the information processing apparatus calculates a vector by the operation corresponding to the terminal subject defined by the calculation relationship of the subject. As a result, the vector of the tag corresponding to the subject other than the terminal subject may also be accurately calculated.

Note that, while the inverted index associated with the sentence vector has been described in the example, the inverted index may be associated with a vector of a particle size of a word or a tag.

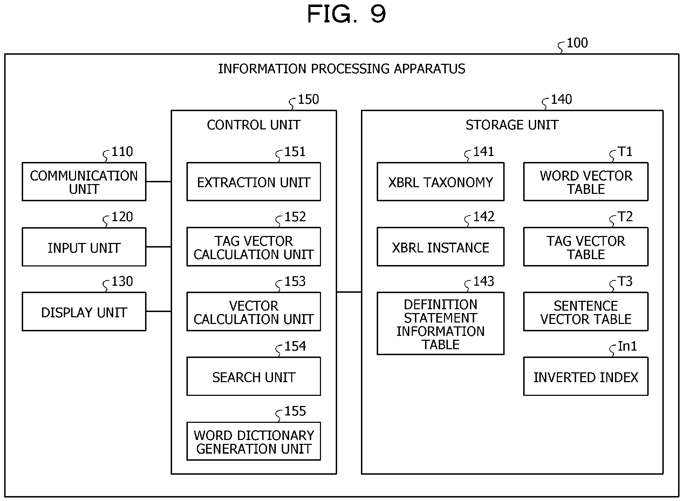

Next, an exemplary configuration of the information processing apparatus that executes the process described with reference to FIGs. 4 and 5 will be described. FIG. 9 is a functional block diagram illustrating a configuration of the information processing apparatus according to the present embodiment. As illustrated in FIG. 9, an information processing apparatus 100 includes a communication unit 110, an input unit 120, a display unit 130, a storage unit 140, and a control unit 150.

The communication unit 110 performs data communication with an external device via a network. The communication unit 110 may receive the XBRL taxonomy 141 and the XBRL instance 142 from the external device.

The input unit 120 is an input device that receives an operation made by a user, and is implemented by, for example, a keyboard, a mouse, or the like. The user may operate the input unit 120 to input a search query.

The display unit 130 is a display device for outputting a result of processing of the control unit 150, and is implemented by, for example, a liquid crystal monitor, a printer, or the like. The display unit 130 may display a search result based on the search query.

The storage unit 140 is a storage device that stores various types of information, and is implemented by, for example, a semiconductor memory element such as a random access memory (RAM) or a flash memory, or a storage device such as a hard disk or an optical disk.

The storage unit 140 stores the XBRL taxonomy 141, the XBRL instance 142, and the definition statement information table 143. Furthermore, the storage unit 140 stores the word vector table T1, the tag vector table T2, the sentence vector table T3, and the inverted index In1.

The XBRL taxonomy 141 has, for each subject, information regarding a definition statement of a subject, a relationship between subjects, and a calculation relationship of subjects defined in the taxonomy. Descriptions regarding the XBRL taxonomy 141 are similar to the contents described with reference to FIG. 4.

The instance 10 and the like described with reference to FIG. 3 are registered in the XBRL instance 142. The instance includes a plurality of sentences including tags.

The definition statement information table 143 is a table that associates a subject extracted from the XBRL taxonomy 141 with a definition statement of the subject and retains them. The information in the definition statement information table 143 is extracted from the XBRL taxonomy 141 by the extraction unit 151.

The word vector table T1 is a table that associates a word with a vector corresponding to the word and retains them. It is assumed that the vector corresponding to the word is learned in advance by a word dictionary generation unit 155 using an existing technique such as Word2Vec or Poincaré embeddings.

The tag vector table T2 is a table in which a subject defined in the XBRL taxonomy 141, which is a subject corresponding to a tag included in the XBRL instance 142, is associated with a vector. A data structure of the tag vector table T2 corresponds to the data structure described with reference to FIG. 6.

The sentence vector table T3 is a table that retains sentence vectors of sentences including tags included in the XBRL instance 142.

The inverted index In1 associates a position (offset) of the sentence of the XBRL instance 142 with the sentence vector. A data structure of the inverted index In1 corresponds to the data structure described with reference to FIG. 8.

The control unit 150 is implemented by a processor, such as a central processing unit (CPU) or a micro processing unit (MPU) executing various programs stored in a storage device inside the information processing apparatus 100 using a RAM or the like as a workspace. Furthermore, the control unit 150 may be implemented by an integrated circuit, such as an application specific integrated circuit (ASIC) or a field programmable gate array (FPGA).

The control unit 150 includes the extraction unit 151, the tag vector calculation unit 152, the vector calculation unit 153, a search unit 154, and the word dictionary generation unit 155.

The extraction unit 151 analyzes the XBRL taxonomy 141, and extracts information regarding a definition statement of a subject for each subject. The extraction unit 151 registers the extracted subject and the definition statement in the definition statement information table 143 in association with each other. Note that the user may operate the input unit 120 to input information regarding the subject and the definition statement in the definition statement information table 143.

The tag vector calculation unit 152 executes the processing of specifying a terminal subject, the processing of calculating a vector of the terminal subject, and the processing of calculating a vector of a subject other than the terminal subject, and generates the tag vector table T2. The processing of specifying a terminal subject, the processing of calculating a vector of the terminal subject, and the processing of calculating a vector of a subject other than the terminal subject, which are executed by the tag vector calculation unit 152, are similar to the processing described with reference to FIG. 4.

Note that, when an absolute value of the calculated vector of the subject (tag) is larger than 1, the tag vector calculation unit 152 normalizes the vectors of the word and subject.

The vector calculation unit 153 calculates a vector of a sentence registered in an XBRL instance 142 using the word vector table T1 and the tag vector table T2. The vector calculation unit 153 generates an inverted index In1 in which a position (offset) of the sentence of the XBRL instance 142 is associated with the sentence vector. The process of the vector calculation unit 153 is similar to the process described with reference to FIG. 5.

When the search unit 154 receives a search query from the input unit 120, it searches for a sentence corresponding to the search query. A sentence specified as a search query may be, for example, a sentence including a tag. The search unit 154 performs morphological analysis on the search query, and divides the sentence included in the search query into words and tags.

The search unit 154 specifies a vector corresponding to a word based on the word vector table T1. The search unit 154 specifies a vector corresponding to a tag based on the tag vector table T2. The search unit 154 calculates a vector of the search query by integrating the vectors of the individual words and tags of the search query. The processing of calculating a vector of the sentence of the search query performed by the search unit 154 is similar to the processing of calculating a vector of the sentence including a tag performed by the vector calculation unit 153. In the following descriptions, a vector of a search query will be referred to as a "search vector".

The search unit 154 calculates similarity (cosine similarity, etc.) between the search vector and each sentence vector set on the vertical axis of the inverted index In1. The search unit 154 obtains, from the XBRL instance 142, the sentence corresponding to the offset corresponding to the sentence vector having the maximum similarity in the inverted index In1, and outputs the obtained sentence to the display unit 130 as a search result.

The word dictionary generation unit 155 learns the vector of each word using an existing technique such as Word2Vec or Poincaré embeddings. The word dictionary generation unit 155 registers the relationship between the learned word and vector in the word vector table T1. Note that the information processing apparatus 100 may obtain the generated (learned) word vector table T1 from an external device or the like, and may register it in the storage unit 140.

Next, an exemplary processing procedure of the information processing apparatus 100 according to the present embodiment will be described. Here, a processing procedure of the preprocessing and a processing procedure of the search process to be executed by the information processing apparatus 100 will be described.

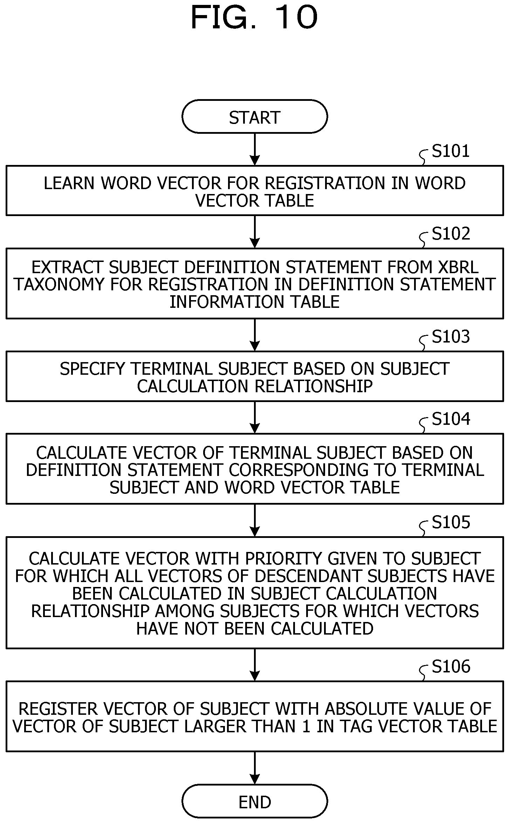

FIG. 10 is a flowchart of the preprocessing to be executed by the information processing apparatus. As illustrated in FIG. 10, the word dictionary generation unit 155 of the information processing apparatus 100 learns word vectors, and registers them in the word vector table T1 (step S101).

The extraction unit 151 of the information processing apparatus 100 extracts definition statements of subjects from the XBRL taxonomy 141, and registers them in the definition statement information table (step S102). The tag vector calculation unit 152 of the information processing apparatus 100 specifies a terminal subject based on a calculation relationship of the subjects (step S103).

The tag vector calculation unit 152 calculates a vector of the terminal subject based on the definition statement corresponding to the terminal subject and the word vector table T1 (step S104).

The tag vector calculation unit 152 calculates a vector with priority given to a subject for which all vectors of descendant subjects have been calculated in the calculation relationship of the subjects among subjects for which vectors have not been calculated (step S105). The tag vector calculation unit 152 registers, in the tag vector table T2, a vector of a subject having an absolute value of the vector of the subject larger than 1 (step S106).

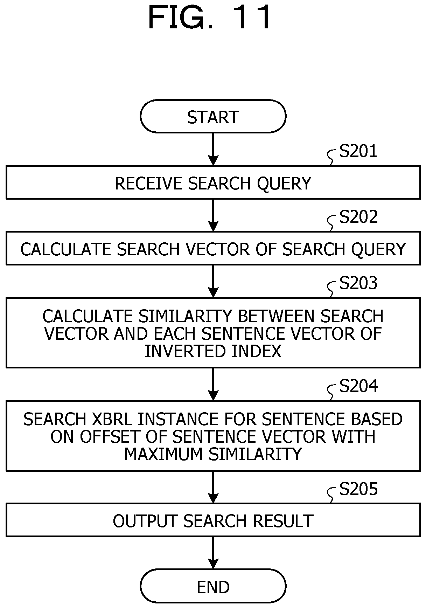

FIG. 11 is a flowchart of the search process to be executed by the information processing apparatus. As illustrated in FIG. 11, the search unit 154 of the information processing apparatus 100 receives a search query from the input unit 120 (step S201).

The search unit 154 calculates a search vector of the search query based on the word vector table T1 and the tag vector table T2 (step S202). The search unit 154 calculates similarity between the search vector and each sentence vector of the inverted index In1 (step S203).

The search unit 154 searches the XBRL instance 142 for a sentence based on the offset of the sentence vector having the maximum similarity (step S204). The search unit 154 outputs the search result to the display unit 130 (step S205).

Next, effects of the information processing apparatus 100 according to the present embodiment will be described. The information processing apparatus 100 specifies a terminal subject defined by a calculation relationship of a certain subject based on the calculation relationship of the subjects and the relationship between the subjects in the XBRL taxonomy 141. For the terminal subject, the information processing apparatus 100 calculates a vector of the terminal subject based on the definition statement corresponding to the terminal subject and the word vector table T1. As a result, the vector of the tag corresponding to the terminal subject may be accurately calculated.

For a subject other than the terminal subject, the information processing apparatus 100 calculates a vector by the operation corresponding to the terminal subject defined by the calculation relationship of the subject. As a result, the vector of the tag corresponding to the subject other than the terminal subject may also be accurately calculated.

For example, in an XBRL document, even if tags are for subjects of different concepts (different tags), text in which the tags are described (context of text) may be similar (e.g., Sales and Cost of sales in FIG. 3). In such a case, when Word2Vec is applied to the XBRL document to calculate a vector of a tag, the vector is calculated from the context of the tag. Thus, when different tags are attached to similar sentences, it is not possible to calculate a vector that may distinguish that the concepts of the tags are different. Furthermore, it is also conceivable to calculate a vector of a tag based on a relationship between subjects included in the XBRL definition information using Poincaré embeddings. However, in this case, a similar vector is assigned to a subject of a concept different from the subject defined by the taxonomy or the like. This is because, in the concept structure of tags in the XBRL definition information defined by the hierarchical relationship as illustrated in FIG. 2, subjects of different concepts exist at similar positions or hierarchical levels in the concept structure (e.g., Sales and Cost of sales in FIG. 2). Thus, the calculated vector may not be used to compare documents including tags. On the other hand, according to the information processing apparatus, a vector of a tag is calculated based on a definition statement that defines a subject corresponding to the tag and a calculation relationship, whereby the vector of the tag corresponding to the subject may be accurately calculated.

In the case of calculating a vector of a subject other than the terminal subject, the information processing apparatus 100 preferentially selects a subject for which vectors of all subjects defined by the calculation relationship of the subjects have been calculated. As a result, a vector of a subject other than the terminal subject may be efficiently calculated.

The information processing apparatus 100 generates the inverted index In1 in which a position (offset) of the sentence of the XBRL instance 142 is associated with the sentence vector, and calculates, when a search query is received, a search vector of the search query. The information processing apparatus 100 searches for a sentence corresponding to the search query based on the search vector and the inverted index In1. As a result, the sentence including the tag may be accurately searched for from the search query including the tag.

The process of the information processing apparatus 100 described above is an example, and other processes may be performed. Here, other processes 1 and 2 of the information processing apparatus 100 according to the present embodiment will be described.

Another process 1 will be described. The vector calculation unit 153 of the information processing apparatus 100 may calculate individual sentence vectors of individual sentences included in the XBRL document, such as a tagged securities report, and may create a transition table in which positions of the sentences are associated with the sentence vectors. The vector calculation unit 153 refers to the transition table to compare the sentence vectors of adjacent sentences, and specifies, as a sentence break, a point between sentences in which a difference between the sentence vectors is equal to or larger than a threshold. The vector calculation unit 153 may automatically generate a plurality of terms by dividing each sentence included in the XBRL document by a sentence break.

Another process 2 will be described. Although the case where the vector calculation unit 153 of the information processing apparatus 100 calculates a sentence vector of each sentence included in the XBRL document has been described, a vector of text including a plurality of sentences may be calculated. In the following descriptions, a vector of text will be referred to as a "text vector". The vector calculation unit 153 calculates a text vector by integrating sentence vectors of individual sentences included in the text. The vector calculation unit 153 may generate an inverted index of the text in which the text vector is associated with the offset of the text. The search unit 154 may receive the text as a search query, and may search the XBRL instance 142 for the text based on the text vector and the inverted index of the text.

Meanwhile, although the case where the information processing apparatus 100 according to the present embodiment performs the process on the XBRL document has been described, it is not limited to the XBRL document. The processing of calculating a vector performed by the information processing apparatus 100 may be similarly applied to a document based on ontology or a thesaurus in which a vocabulary concept (corresponding to a definition statement) and a vocabulary system (hierarchical relationship of the vocabulary) are clearly defined. For example, examples of the vocabulary system of the ontology include Japanese WordNet. Furthermore, examples of information corresponding to the definition statement of the ontology include a simple knowledge organization system (SKOS) reference or the like.

For example, the information processing apparatus 100 calculates a vector of a terminal item using the word vector table T1 and data of the vocabulary concept corresponding to the terminal item among the items of the ontology. Furthermore, the information processing apparatus 100 calculates a vector for an item defined by an operation of a descendant item among the items of the ontology by an operation of a vector of the descendant item.

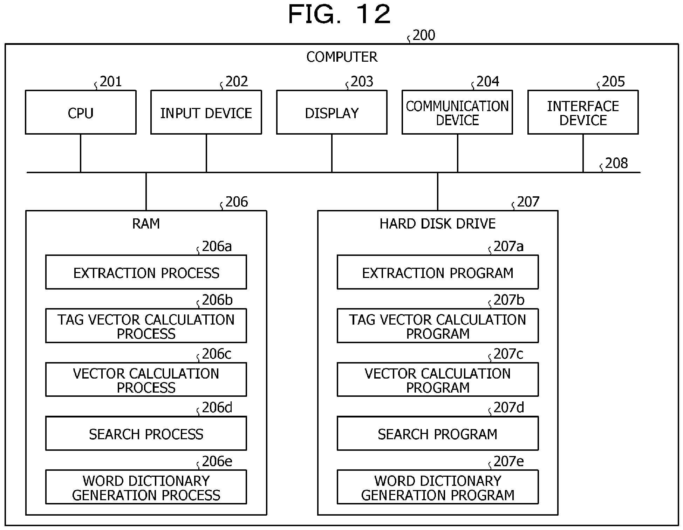

Next, an exemplary hardware configuration of a computer that implements functions similar to those of the information processing apparatus 100 indicated in the embodiment described above will be described. FIG. 12 is a diagram illustrating an exemplary hardware configuration of the computer that implements functions similar to those of the information processing apparatus according to the embodiment.

As illustrated in FIG. 12, a computer 200 includes a CPU 201 that executes various types of arithmetic processing, an input device 202 that receives data input from a user, and a display 203. Furthermore, the computer 200 includes a communication device 204 that exchanges data with an external device or the like via a wired or wireless network, and an interface device 205. Furthermore, the computer 200 includes a RAM 206 that temporarily stores various types of information, and a hard disk drive 207. Additionally, each of the devices 201 to 207 is coupled to a bus 208.

The hard disk drive 207 includes an extraction program 207a, a tag vector calculation program 207b, a vector calculation program 207c, a search program 207d, and a word dictionary generation program 207e. Furthermore, the CPU 201 reads each of the programs 207a to 207e, and loads it to the RAM 206.

The extraction program 207a functions as an extraction process 206a. The tag vector calculation program 207b functions as a tag vector calculation process 206b. The vector calculation program 207c functions as a vector calculation process 206c. The search program 207d functions as a search process 206d. The word dictionary generation program 207e functions as a word dictionary generation process 206e.

Processing of the extraction process 206a corresponds to the processing of the extraction unit 151. Processing of the tag vector calculation process 206b corresponds to the processing of the tag vector calculation unit 152. Processing of the vector calculation process 206c corresponds to the processing of the vector calculation unit 153. Processing of the search process 206d corresponds to the processing of the search unit 154. Processing of the word dictionary generation process 206e corresponds to the processing of the word dictionary generation unit 155.

Note that each of the programs 207a to 207e is not necessarily stored in the hard disk drive 207 from the beginning. For example, each of the programs is stored in a "portable physical medium" to be inserted into the computer 200, such as a flexible disk (FD), a compact disc read only memory (CD-ROM), a digital versatile disc (DVD), a magneto-optical disk, or an integrated circuit (IC) card. Then, the computer 200 may read and execute each of the programs 207a to 207e.

REFERENCE SIGNS LIST

100　　Information processing apparatus

110　　Communication unit
120　　Input unit
130　　Display unit
140　　Storage unit
141　　XBRL taxonomy
142　　XBRL instance
143　　Definition statement information table

150    Control unit
151    Extraction unit
152    Tag vector calculation unit
153    Vector calculation unit
154    Search unit
155    Word dictionary generation unit

**Claims**

1.  An information processing program for causing a computer to perform a process comprising:

    specifying a terminal subject based on a parent-child relationship of subjects that correspond to a plurality of tags used in a document; and
    calculating a vector of a tag that corresponds to the terminal subject based on each word included in definition information set for the terminal subject and a word vector dictionary that defines a vector of each word.

2.  The information processing program according to claim 1, the program causing the computer to perform the process further comprising:
    calculating a vector of a tag that corresponds to a subject other than the terminal subject based on a parent-child relationship between a vector that corresponds to the terminal subject and the subject other than the terminal subject.

3.  The information processing program according to claim 2, the program causing the computer to perform the process further comprising:
    registering a relationship between the tag and the vector of the tag in a tag vector dictionary, and calculating a vector of the document based on the word vector dictionary and the tag vector dictionary.

4.  The information processing program according to claim 3, wherein
    the calculating the vector of the tag that corresponds to the subject other than the terminal subject preferentially calculates the vector of the subject for which all vectors of the subjects included in the parent-child relationship of the subject other than the terminal subject are calculated.

5.  The information processing program according to claim 4, the program causing the computer to perform the process further comprising:
    generating an index in which the vector of the document is associated with a registration position of the document, and when a search query is received, searching for a document that corresponds to the search query based on a vector of the search query and the index.

6.  The information processing program according to claim 1, wherein
    the parent-child relationship includes a calculation relationship of the subjects that correspond to the plurality of tags, and the calculation relationship derives a value of a subject using a value of the terminal subject among the subjects that correspond to the plurality of tags.

7.  The information processing program according to claim 6, wherein
    the specifying the terminal subject specifies the terminal subject based on the calculation relationship of the subjects defined in taxonomy of an extensible business reporting language (XBRL) document.

8.  An information processing method for causing a computer to perform a process comprising:

    specifying a terminal subject based on a parent-child relationship of subjects that correspond to a plurality of tags used in a document; and
    calculating a vector of a tag that corresponds to the terminal subject based on each word included in definition information set for the terminal subject and a word vector dictionary that defines a vector of each word.

9.  The information processing method according to claim 8, the program causing the computer to perform the process further comprising:
    calculating a vector of a tag that corresponds to a subject other than the terminal subject based on a parent-child relationship between a vector that corresponds to the terminal subject and the subject other than the terminal subject.

10. The information processing method according to claim 9, the program causing the computer to perform the process further comprising:
registering a relationship between the tag and the vector of the tag in a tag vector dictionary, and calculating a vector of the document based on the word vector dictionary and the tag vector dictionary.

11. The information processing method according to claim 10, wherein
the calculating the vector of the tag that corresponds to the subject other than the terminal subject preferentially calculates the vector of the subject for which all vectors of the subjects included in the parent-child relationship of the subject other than the terminal subject are calculated.

12. The information processing method according to claim 11, the program causing the computer to perform the process further comprising:
generating an index in which the vector of the document is associated with a registration position of the document, and when a search query is received, searching for a document that corresponds to the search query based on a vector of the search query and the index.

13. The information processing method according to claim 8, wherein
the parent-child relationship includes a calculation relationship of the subjects that correspond to the plurality of tags, and the calculation relationship derives a value of a subject using a value of the terminal subject among the subjects that correspond to the plurality of tags.

14. The information processing method according to claim 13, wherein
the specifying the terminal subject specifies the terminal subject based on the calculation relationship of the subjects defined in taxonomy of an extensible business reporting language (XBRL) document.

15. An information processing apparatus comprising:
a control unit configured to:

specify a terminal subject based on a parent-child relationship of subjects that correspond to a plurality of tags used in a document; and
calculate a vector of a tag that corresponds to the terminal subject based on each word included in definition information set for the terminal subject and a word vector dictionary that defines a vector of each word.

16. The information processing apparatus according to claim 15, wherein
the control unit calculates a vector of a tag that corresponds to a subject other than the terminal subject based on a parent-child relationship between a vector that corresponds to the terminal subject and the subject other than the terminal subject.

17. The information processing apparatus according to claim 16, wherein
the control unit registers a relationship between the tag and the vector of the tag in a tag vector dictionary, and calculates a vector of the document based on the word vector dictionary and the tag vector dictionary.

18. The information processing apparatus according to claim 17, wherein
a process to calculate the vector of the tag that corresponds to the subject other than the terminal subject preferentially calculates the vector of the subject for which all vectors of the subjects included in the parent-child relationship of the subject other than the terminal subject are calculated.

19. The information processing apparatus according to claim 18, wherein
the control unit generates an index in which the vector of the document is associated with a registration position of the document, and when a search query is received, searches for a document that corresponds to the search query based on a vector of the search query and the index.

20. The information processing apparatus according to claim 15, wherein
the parent-child relationship includes a calculation relationship of the subjects that correspond to the plurality of tags, and the calculation relationship derives a value of a subject using a value of the terminal subject among the subjects that correspond to the plurality of tags.

21. The information processing program according to claim 20, wherein

a process to specify the terminal subject specifies the terminal subject based on the calculation relationship of the subjects defined in taxonomy of an extensible business reporting language (XBRL) document.

## FIG. 1A

OPERATING INCOME
IN OPERATING PROFIT-AND-LOSS CALCULATION, GROSS PROFIT IS CALCULATED
BY DESCRIBING SALES AND COST OF SALES IN SINGLE ACCOUNTING PERIOD,
AND SELLING, GENERAL AND ADMINISTRATIVE EXPENSES ARE SUBTRACTED
THEREFROM TO DISPLAY OPERATING INCOME.

A       IF PRINCIPAL BUSINESS OF CORPORATION IS BOTH SALES OF GOODS,
ETC. AND SUPPLY OF SERVICES, OPERATING INCOME FROM SALES OF GOODS,
ETC. AND SERVICES SHOULD BE SEPARATELY PRESENTED.
B       SALES ARE LIMITED TO THOSE ACHIEVED THROUGH SALES OF GOODS,
ETC. OR SUPPLY OF SERVICES IN ACCORDANCE WITH REALIZATION PRINCIPLE.
HOWEVER, FOR LONG-TERM CONTRACT WORK IN PROGRESS, ETC., REVENUE
MAY BE REASONABLY ESTIMATED AND RECORDED IN CURRENT PROFIT-AND-
LOSS CALCULATION.
(NOTE 6) (NOTE 7) TO EXPLANATORY NOTE PAGE
C       COST OF SALES IS PURCHASING COST OF GOODS, ETC. OR
MANUFACTURING COST CORRESPONDING TO SALES, WHICH IS PRESENTED IN
FORM OF ADDING PURCHASES TO BEGINNING MERCHANDISE INVENTORY AND
SUBTRACTING ENDING MERCHANDISE INVENTORY THEREFROM IN CASE OF
COMMERCE, AND IS PRESENTED IN FORM OF ADDING COST OF GOODS
MANUFACTURED TO BEGINNING FINISHED GOODS INVENTORY AND
SUBTRACTING ENDING FINISHED GOODS INVENTORY THEREFROM IN CASE OF
MANUFACTURING INDUSTRY. (NOTE 8) (NOTE 9) (NOTE 10)
D       REST IS OMITTED.

## FIG. 1B

COST OF SALES IS PURCHASING COST OR MANUFACTURING COST OF GOODS
CORRESPONDING TO SALES.

# FIG. 2

Element

⊟-◇  CONSOLIDATED INCOME (AND COMPREHENSIVE INCOME) STATEMENT

　⊟-ⓘ COMPREHENSIVE INCOME

　　⊟-ⓘ CURRENT NET INCOME OR CURRENT NET LOSS (△)

　　　⊟-ⓘ INCOME BEFORE INCOME TAXES OR LOSS BEFORE INCOME TAXES (△)

　　　　⊟-ⓘ ORDINARY INCOME OR ORDINARY LOSS (△)

　　　　　⊟-ⓘ OPERATING INCOME OR OPERATING LOSS (△)

　　　　　　⊟-ⓘ GROSS PROFIT OR GROSS LOSS (△)

　　　　　　　ⓘ SALES

　　　　　　　ⓘ COST OF SALES

　　　　　　　...

# FIG. 3

10

...
AMOUNT OF SALES IS <SALES> 300 </SALES> YEN.···
AMOUNT OF COST OF SALES IS <COST OF SALES> 100 </COST
OF SALES> YEN.···
...
GROSS PROFIT IS <GROSS PROFIT OR GROSS LOSS> 200 </
GROSS PROFIT OR GROSS LOSS> YEN.···
...

# FIG. 4

XBRL TAXONOMY — 141

- SUBJECT DEFINITION STATEMENT
- RELATIONSHIP BETWEEN SUBJECTS
- SUBJECT CALCULATION RELATIONSHIP

EXTRACTION UNIT — 151

DEFINITION STATEMENT INFORMATION TABLE — 143

TAG VECTOR CALCULATION UNIT — 152

WORD VECTOR TABLE — T1

TAG VECTOR TABLE — T2

# FIG. 5

# FIG. 6

| SUBJECT (TAG) | VECTOR |
|---|---|
| SALES | VT1 |
| COST OF SALES | VT2 |
| GROSS PROFIT OR GROSS LOSS ($\Delta$) | VT3 |
| ... | ... |

T2

# FIG. 7

20

AMOUNT OF SALES IS <SALES> 300 </SALES> YEN.

MORPHOLOGICAL
ANALYSIS

AMOUNT  OF  SALES  IS  <SALES>  300  </SALES>  YEN  .

20-3

20-2

20-1

20-4

20-8

20-5

20-9

20-6

20-7

# FIG. 8

In1

···     9   8   7    ···

OFFSET

1    Svec1

1     Svec2

1     Svec3

···    ···

SENTENCE
VECTOR

# FIG. 9

INFORMATION PROCESSING APPARATUS ⌇100

CONTROL UNIT ⌇150

STORAGE UNIT ⌇140

COMMUNICATION UNIT ⌇110

EXTRACTION UNIT ⌇151

XBRL TAXONOMY ⌇141

WORD VECTOR TABLE ⌇T1

INPUT UNIT ⌇120

TAG VECTOR CALCULATION UNIT ⌇152

XBRL INSTANCE ⌇142

TAG VECTOR TABLE ⌇T2

DISPLAY UNIT ⌇130

VECTOR CALCULATION UNIT ⌇153

DEFINITION STATEMENT INFORMATION TABLE ⌇143

SENTENCE VECTOR TABLE ⌇T3

SEARCH UNIT ⌇154

INVERTED INDEX ⌇In1

WORD DICTIONARY GENERATION UNIT ⌇155

# FIG. 10

START

S101

LEARN WORD VECTOR FOR REGISTRATION IN WORD
VECTOR TABLE

S102

EXTRACT SUBJECT DEFINITION STATEMENT FROM XBRL
TAXONOMY FOR REGISTRATION IN DEFINITION STATEMENT
INFORMATION TABLE

S103

SPECIFY TERMINAL SUBJECT BASED ON SUBJECT
CALCULATION RELATIONSHIP

S104

CALCULATE VECTOR OF TERMINAL SUBJECT BASED ON
DEFINITION STATEMENT CORRESPONDING TO TERMINAL
SUBJECT AND WORD VECTOR TABLE

S105

CALCULATE VECTOR WITH PRIORITY GIVEN TO SUBJECT
FOR WHICH ALL VECTORS OF DESCENDANT SUBJECTS HAVE
BEEN CALCULATED IN SUBJECT CALCULATION
RELATIONSHIP AMONG SUBJECTS FOR WHICH VECTORS
HAVE NOT BEEN CALCULATED

S106

REGISTER VECTOR OF SUBJECT WITH ABSOLUTE VALUE OF
VECTOR OF SUBJECT LARGER THAN 1 IN TAG VECTOR TABLE

END

# FIG. 11

```
                    ┌──────────────┐
                    │    START     │
                    └──────┬───────┘
                           │          ⌇S201
          ┌────────────────▼──────────────────┐
          │       RECEIVE SEARCH QUERY         │
          └────────────────┬──────────────────┘
                           │          ⌇S202
          ┌────────────────▼──────────────────┐
          │  CALCULATE SEARCH VECTOR OF SEARCH QUERY  │
          └────────────────┬──────────────────┘
                           │          ⌇S203
          ┌────────────────▼──────────────────┐
          │   CALCULATE SIMILARITY BETWEEN SEARCH   │
          │   VECTOR AND EACH SENTENCE VECTOR OF    │
          │            INVERTED INDEX              │
          └────────────────┬──────────────────┘
                           │          ⌇S204
          ┌────────────────▼──────────────────┐
          │  SEARCH XBRL INSTANCE FOR SENTENCE BASED  │
          │   ON OFFSET OF SENTENCE VECTOR WITH    │
          │         MAXIMUM SIMILARITY            │
          └────────────────┬──────────────────┘
                           │          ⌇S205
          ┌────────────────▼──────────────────┐
          │        OUTPUT SEARCH RESULT        │
          └────────────────┬──────────────────┘
                           │
                    ┌──────▼───────┐
                    │     END      │
                    └──────────────┘
```

# FIG. 12

<div align="center">

### INTERNATIONAL SEARCH REPORT

</div>

| International application No. |
|---|
| **PCT/JP2022/009551** |

**A.    CLASSIFICATION OF SUBJECT MATTER**

*G06F 16/383*(2019.01)i; *G06F 16/81*(2019.01)i; *G06F 16/83*(2019.01)i
FI:    G06F16/81; G06F16/83; G06F16/383

According to International Patent Classification (IPC) or to both national classification and IPC

**B.    FIELDS SEARCHED**

Minimum documentation searched (classification system followed by classification symbols)

G06F16/383; G06F16/81; G06F16/83

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2003-186590 A (SHARP CORP.) 04 July 2003 (2003-07-04)<br>paragraphs [0030], [0064]-[0065], [0068], [0071], [0078] | 1-21 |
| A | JP 2010-186325 A (PRONEXUS INC.) 26 August 2010 (2010-08-26)<br>paragraphs [0042]-[0052] | 1-21 |
| A | JP 7-200693 A (IBM JAPAN, LTD.) 04 August 1995 (1995-08-04)<br>paragraph [0086], fig. 12-13 | 1-21 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **01 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/009551**

| Patent document cited in search report | | | Publication date (day/month/year) | Patent family member(s) | Publication date (day/month/year) |
|---|---|---|---|---|---|
| JP | 2003-186590 | A | 04 July 2003 | (Family: none) | |
| JP | 2010-186325 | A | 26 August 2010 | (Family: none) | |
| JP | 7-200693 | A | 04 August 1995 | (Family: none) | |

Form PCT/ISA/210 (patent family annex) (January 2015)